# FASCICULE DE BREVET EUROPEEN

(11) **EP 4 612 376 B1**
(45) Date de publication et mention de la délivrance du brevet: **14.10.2026**
(21) Numéro de dépôt: 23798166.7
(22) Date de dépôt: 25.10.2023
(51) Int. Cl.: E03D 1/32, F16K 17/28

(54) **SYSTÈME D'AMENÉE D'EAU DANS UN RÉSERVOIR DE CHASSE D'EAU**
WASSERZULAUFSYSTEM IN EINEN SPÜLKASTEN
WATER INLET SYSTEM IN A TOILET CISTERN

(30) Priorité: 04.11.2022 FR 2211497
(43) Date de publication de la demande: 10.09.2025
(73) Titulaire: SIAMP CEDAP, 98000 Monaco (MC)
(72) Inventeur: MARNAS, Stéphane, 06200 Nice (FR); PLAS, Olivier, 06340 La Trinité (FR)
(74) Mandataire: Germain Maureau
(86) Numéro de dépôt international: PCT/EP2023/079716
(87) Numéro de publication internationale: WO 2024/094509

(56) Documents cités:
- EP-A1- 2 700 759
- DE-A1- 102015 007 189
- DE-U1- 20 104 731
- FR-A1- 2 865 749
- US-A- 2 802 218

## Description

L'invention concerne un système d'amenée d'eau dans un réservoir de chasse d'eau, comme on peut le voir, par exemple, dans le document EP 2 700 759 A1.

De façon conventionnelle, un tel système comprend un conduit qui est raccordé à un réseau d'alimentation en eau et qui débouche dans le réservoir. Une soupape permet ou empêche l'écoulement de l'eau vers le réservoir en fonction de la hauteur d'eau dans celui-ci.

Il est impératif d'empêcher le retour d'eau dans le réseau d'alimentation, ce qui peut typiquement arriver en cas de dépression dans ce réseau. A cet effet, il est connu de prévoir un orifice de prise d'air en partie supérieure des systèmes d'amenée d'eau.

En fonctionnement, lorsque la soupape s'ouvre, l'eau s'écoule dans le conduit. Afin d'empêcher que des gouttes d'eau ne sortent par l'orifice de prise d'air, les systèmes d'amenée d'eau sont classiquement pourvus d'un obturateur mobile qui est soulevé par flottaison dès qu'il est atteint par le niveau d'eau. L'obturateur vient donc fermer très rapidement l'orifice de prise d'air, évitant ainsi les éclaboussures. Ce faisant, l'air présent dans le système se trouve emprisonné. Cet air se mélange à l'eau, créant des bulles qui génèrent un bruit désagréable.

L'invention vise à remédier à cet inconvénient, c'est-à-dire à réduire ou supprimer les bruits de cavitation consécutifs à l'ouverture de la soupape.

A cet effet, et selon un premier aspect, l'invention concerne un système d'amenée d'eau dans un réservoir de chasse d'eau, comprenant, en position montée :
- un corps comportant dans sa partie supérieure un orifice de prise d'air ;
- un premier conduit ménagé dans le corps, configuré pour être raccordé, à son extrémité amont, à un réseau d'alimentation en eau ;
- un deuxième conduit ménagé au moins en partie dans le corps, présentant une extrémité amont en communication fluidique avec le premier conduit via une ouverture, et une extrémité aval située plus bas que l'extrémité amont, le deuxième conduit comportant une lumière située sensiblement au droit verticalement de l'orifice de prise d'air, la bordure périphérique de la lumière définissant une surface d'appui ;
- une soupape qui est montée sur le corps et qui, en fonction de la hauteur d'eau dans le réservoir, peut être dans un état fermé dans lequel un clapet de la soupape obture ladite ouverture avec étanchéité, ou dans un état ouvert dans lequel l'ouverture est libérée ;
- un obturateur mobile entre :
   - une position basse, dans laquelle il repose sur la surface d'appui en ménageant dans la lumière un espace de communication entre l'intérieur et l'extérieur du deuxième conduit, l'orifice de prise d'air étant dégagé ;
   - et une position haute, dans laquelle il obture l'orifice de prise d'air.

Selon une définition générale de l'invention, le système d'amenée d'eau comprend en outre un dispositif de modification de l'écoulement qui est fixé au deuxième conduit en aval de la lumière et qui crée une contre-pression lorsque de l'eau s'écoule dans le système en direction du réservoir. De plus, l'obturateur possède une densité supérieure à 1,4, l'empêchant ainsi de flotter. Ainsi, en partant d'un état inactif du système où le clapet est en position fermée et l'obturateur en position basse, l'ouverture de la soupape et l'écoulement d'eau qui en résulte dans le deuxième conduit provoque le déplacement de l'obturateur vers sa position haute sous l'effet de la contre-pression créée par le dispositif de modification de l'écoulement.

Avec un tel agencement, pour que l'obturateur puisse se déplacer vers sa position haute, il ne suffit pas que le niveau de l'eau atteigne l'obturateur comme c'est le cas dans l'art antérieur où l'obturateur est conçu pour flotter. Dans le système selon l'invention, l'obturateur ayant une densité l'empêchant de flotter, il faut qu'une force supplémentaire s'exerce sur l'obturateur pour pouvoir le soulever. Ceci se produit lorsque la contre-pression créée par le dispositif de modification de l'écoulement, c'est-à-dire la pression qui s'oppose à l'écoulement du fluide, est suffisante pour soulever l'obturateur. Le déplacement de l'obturateur du système de l'invention vers sa position haute intervient donc avec un décalage temporel par rapport à un déplacement par simple flottaison comme c'est le cas dans l'art antérieur. De ce fait, cela laisse davantage de temps à l'air présent dans le corps pour s'échapper par l'orifice de prise d'air avant que ce dernier ne soit obturé. Il s'ensuit que la quantité de bulles dans l'eau s'écoulant dans le système d'amenée d'eau est considérablement réduite, ce qui se traduit par une diminution significative du bruit se produisant à l'ouverture de la soupape.

Selon une réalisation possible, l'obturateur possède une densité supérieure à 2.

L'obturateur peut être réalisé en un matériau appartenant au groupe constitué de :l'acier inoxydable, le verre, l'aluminium, le polyoxyméthylène (POM), les matériaux plastiques chargés (par exemple avec une charge minérale ou avec des fibres de verre ou des fibres de carbone) tel que le polyamide chargé notamment. Plus généralement, l'obturateur peut être réalisé en tout matériau qui ne flotte pas et qui résiste à l'eau dans le temps.

Selon une réalisation possible, l'obturateur est une bille.

Dans ce cas, la lumière ménagée dans le deuxième conduit peut être oblongue, ou sensiblement ovale, de façon à laisser un espace de communication entre l'intérieur et l'extérieur du deuxième conduit lorsque la bille est en position basse. Ceci permet l'entrée d'air à l'intérieur du deuxième conduit, par l'orifice de prise d'air, lorsque la bille est en position basse.

Par exemple, la distance parcourue par l'obturateur entre la position basse et la position haute est supérieure à la moitié de la hauteur de l'obturateur, de préférence supérieure à la hauteur de l'obturateur. Cette distance étant relativement importante, et plus importante que dans l'art antérieur, le déplacement de l'obturateur jusqu'à sa position haute nécessite un certain temps pendant lequel l'air peut s'évacuer par l'orifice de prise d'air. Ainsi, cette caractéristique dimensionnelle permet d'améliorer encore la performance du système selon l'invention.

Selon une réalisation possible, l'obturateur est situé dans un logement ménagé dans le corps, ledit logement possédant la forme d'une cloche convergeant vers le haut, et présentant une ouverture inférieure située au voisinage de la lumière ménagée dans le deuxième conduit et une ouverture supérieure située au voisinage de ou formant l'orifice de prise d'air. Ce logement, qui peut être monté dans une portion cylindrique du corps, permet de guider le déplacement de l'obturateur vers sa position haute, et de canaliser l'air.

Selon un mode de réalisation, le deuxième conduit comporte une première portion sensiblement horizontale dans laquelle est ménagée la lumière, prolongée par une deuxième portion sensiblement verticale et descendante. La lumière est de préférence située au voisinage de la jonction entre les première et deuxième portions. Avec cet agencement, l'obturateur est directement soumis à l'effet de la contre-pression, puisqu'il est situé sensiblement dans l'alignement de la deuxième portion sensiblement verticale du deuxième conduit.

Selon un mode de réalisation, la surface d'appui définie par la lumière s'étend sensiblement dans un plan qui est incliné par rapport à un plan horizontal, vers l'aval, d'un angle de l'ordre de 4 à 8°. De plus, la lumière oblongue - ou sensiblement ovale - présente une grande dimension orientée globalement parallèlement à l'axe de la première portion du deuxième conduit (moyennant l'inclinaison précitée). De la sorte, en position basse, du fait de la gravité, l'obturateur se localise de façon reproductible à l'extrémité aval de la lumière. La partie amont de la lumière est libre, permettant une évacuation plus efficace de l'air.

Le système d'amenée d'eau peut en outre comprendre un capuchon qui est monté sur le corps au-dessus de l'orifice de prise d'air, et qui comporte un canal possédant un trou situé en regard de l'orifice de prise d'air et débouchant à l'extérieur du corps, de sorte que des gouttes projetées depuis l'intérieur du corps via l'orifice de prise d'air puissent entrer dans le canal et y être guidées jusqu'à retomber dans le réservoir, en position montée du système. Le fait de retarder l'obturation de l'orifice de prise d'air par rapport à l'art antérieur peut se traduire par la sortie de gouttes par cet orifice, ce qui n'est pas souhaitable, et le capuchon permet de limiter les projections de gouttes. Avec cette disposition, l'invention permet de réduire le bruit généré tout en contrôlant les éclaboussures. Bien entendu, le capuchon n'empêche pas l'entrée d'air par l'orifice de prise d'air, l'air pouvant entrer via le canal du capuchon.

Selon un deuxième aspect, l'invention concerne des toilettes comportant une cuvette, un réservoir de chasse d'eau et un système d'amenée d'eau dans le réservoir tel que précédemment décrit.

Selon un premier mode de réalisation, le dispositif de modification de l'écoulement comprend un embout fixé à l'extrémité aval du deuxième conduit, l'embout possédant une section convergente et étant configuré pour former une partie d'un dispositif d'aspiration par effet Venturi. Dans ce cas, c'est la restriction de la section de passage de l'eau qui crée la contre-pression. Avec un tel agencement, les toilettes peuvent comprendre un système de chasse d'eau qui comporte :
- un système d'amenée d'eau tel que décrit ci-dessus ;
- un tube d'éjection vertical ascendant monté sur l'embout, l'extrémité amont du tube d'éjection étant placée en regard de l'extrémité aval de l'embout, au moins un orifice étant ménagé entre l'embout et le tube d'éjection pour permettre l'aspiration de l'eau contenue dans le réservoir par effet Venturi ;
- un tube de déversement monté à l'extrémité aval du tube d'éjection, pour diriger l'eau en direction de la cuvette.

Le réservoir de chasse d'eau peut être situé sensiblement à la même hauteur que la cuvette, puisque l'amenée d'eau met en œuvre l'effet Venturi, qui n'a pas besoin de la gravité pour fonctionner. Les toilettes peuvent en outre comprendre un système de remplissage du réservoir de chasse d'eau qui est distinct du système de chasse d'eau.

Selon un deuxième mode de réalisation, le dispositif de modification de l'écoulement comprend un manchon monté à l'intérieur du deuxième conduit, le manchon contenant un ensemble de billes entre lesquelles l'eau peut s'écouler, et formant un silencieux permettant la diminution du bruit engendré par l'écoulement. Dans ce cas, c'est le fait de forcer l'eau à passer entre les billes qui crée la contre-pression. Avec un tel agencement, ledit système d'amenée d'eau forme un système de remplissage du réservoir de chasse d'eau.

On décrit à présent, à titre d'exemples non limitatifs, plusieurs modes de réalisation possibles de l'invention, en référence aux figures annexées :
La figure 1 est une vue schématique en section verticale dans un plan P1 d'un système d'amenée d'eau dans un réservoir de chasse d'eau, selon l'invention, ledit système incluant un dispositif de modification de l'écoulement et un obturateur, ce dernier étant en position basse ;
La figure 2 est une vue partielle, en perspective, coupée selon un plan P2 vertical orthogonal au plan P1, du système de la figure 1 ;
La figure 3 est une vue partielle en perspective, coupée selon le plan P1, du système de la figure 1 ;
La figure 4 est une vue de détail du système d'amenée d'eau, en coupe dans le plan P1, lorsque l'obturateur est en position haute ;
La figure 5 est une vue de détail, en coupe dans le plan P2, lorsque l'obturateur est en position haute ;
La figure 6 est une vue en perspective d'un système de chasse d'eau qui comporte un système d'amenée d'eau selon un premier mode de réalisation ;
La figure 7 est une vue en perspective de toilettes comportant le système de chasse d'eau de la figure 6 ;
La figure 8 est une vue de détail, en coupe verticale, du système de chasse d'eau de la figure 6, montrant le dispositif de modification de l'écoulement ;
La figure 9 est une vue en coupe transversale d'un système d'amenée d'eau selon un deuxième mode de réalisation, ce système formant un système de remplissage d'un réservoir de chasse d'eau ;
La figure 10 est une vue de détail du dispositif de modification de l'écoulement du système de la figure 9.

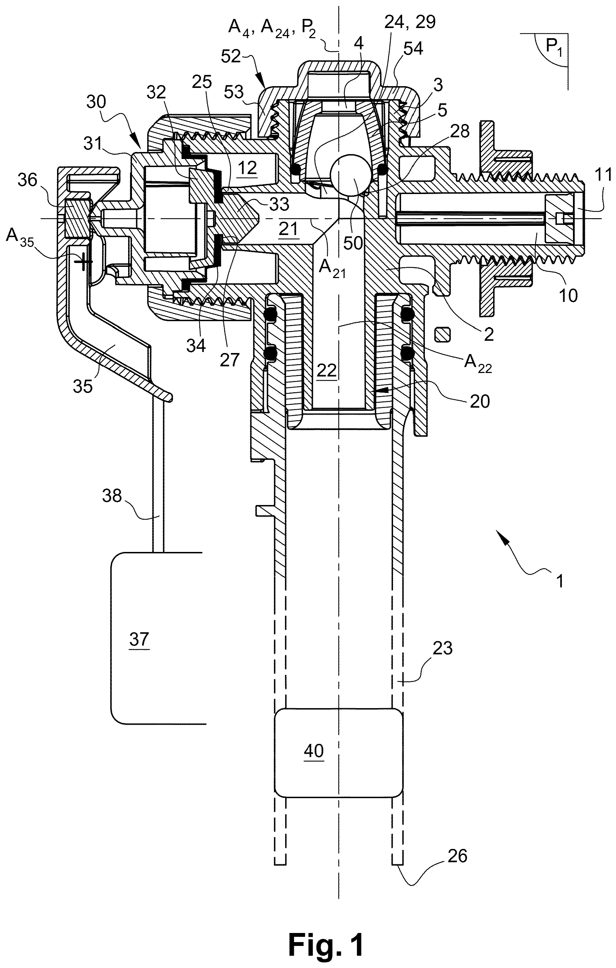

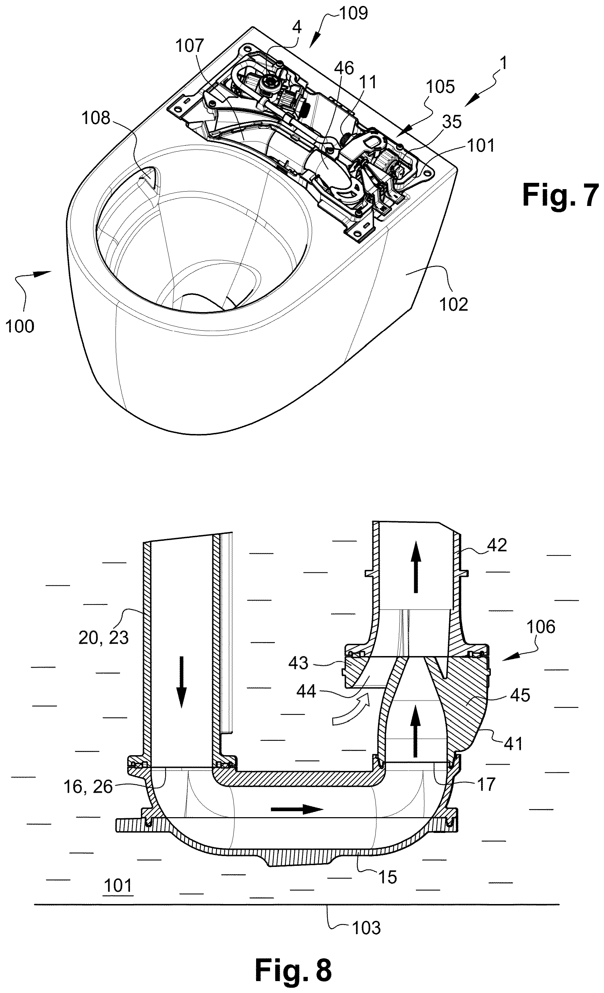

La figure 1 représente un système d'amenée d'eau 1 selon un mode de réalisation de l'invention. Un tel système d'amenée d'eau 1 permet d'amener de l'eau dans un réservoir 101 de chasse d'eau appartenant à des toilettes 100, tel que celui illustré à titre d'exemple sur la figure 7.

Le système d'amenée d'eau 1 est décrit ci-après dans sa position montée.

Le système d'amenée d'eau 1 comprend un corps 2. Dans le corps 2 est ménagé un premier conduit 10 qui présente une extrémité amont 11 configurée pour être raccordée à un réseau d'alimentation en eau. Le premier conduit 10 présente en outre une extrémité aval qui débouche dans une chambre 12.

Un deuxième conduit 20 est ménagé au moins en partie dans le corps 2. Le deuxième conduit 20 présente une extrémité amont 25 qui est en communication fluidique avec la chambre 12, donc avec le premier conduit 10, via une ouverture 27, et une extrémité aval 26 située plus bas que l'extrémité amont 25.

Selon une réalisation possible, le deuxième conduit 20 comporte une première portion 21 sensiblement horizontale, qui peut être ménagée dans le corps 2, à partir de l'ouverture 27, prolongée par une deuxième portion 22 sensiblement verticale et descendante, qui peut également être ménagée dans le corps 2. Le deuxième conduit 20 peut de plus comporter une troisième portion 23 verticale et descendante, assemblée de façon étanche dans le corps 2, et prolongeant la deuxième portion 22 à l'extérieur du corps, jusqu'à l'extrémité aval 26. La première portion 21 présente un axe A21 et la deuxième portion 22 présente un axe A22.

Le système d'amenée d'eau 1 comprend de plus une soupape 30 montée sur le corps 2. La soupape 30 peut comporter d'une part un boîtier 31 définissant un volume intérieur et présentant une ouverture tournée vers le deuxième conduit 20, et d'autre part un élément de fermeture ou clapet 32 monté dans l'ouverture du boîtier 31.

L'élément de fermeture ou clapet 32 peut comporter une tête 33 qui s'engage dans le deuxième conduit 20, la tête 33 définissant à sa base une gorge annuaire dans laquelle est montée une membrane 34 souple apte à s'appliquer sur l'ouverture 27. En outre, le boîtier 31 comporte un orifice 39 de faibles dimensions à l'opposé de l'élément de fermeture ou clapet 32.

En fonction de la hauteur d'eau dans le réservoir 101, la soupape 30 peut être dans un état fermé dans lequel elle obture l'ouverture 27 avec étanchéité, empêchant ainsi l'écoulement d'eau dans le deuxième conduit 20, ou dans un état ouvert dans lequel l'ouverture 27 est libérée, autorisant l'écoulement d'eau dans le deuxième conduit 20.

Plus particulièrement, un levier 35 est monté sur le corps 2 de façon pivotante autour d'un axe A35 qui est ici sensiblement horizontal et parallèle à l'ouverture 27. Le levier 35 est muni d'un joint 36 situé en regard de l'orifice 39 et est lié à un flotteur 37, par exemple via une tige 38. Ainsi, le déplacement vertical du flotteur 37 entraîne le pivotement du levier 35 et le déplacement du joint 36, obturant ou libérant l'orifice 29. En fonction de l'équilibrage des pressions, la membrane 34 est plaquée avec étanchéité sur l'ouverture 27, ce qui correspond à l'état fermé de la soupape 30, ou la membrane 34 se détache de l'ouverture 27, ce qui correspond à l'état ouvert de la soupape 30.

Le corps 2 comporte dans sa partie supérieure un orifice de prise d'air 4. L'orifice de prise d'air 4 s'étend de préférence dans un plan sensiblement horizontal, et est de préférence ménagé dans la partie la plus haute du corps 2. Par exemple, comme illustré sur la figure 1, le corps 2 peut comporter une portion cylindrique 3 d'axe vertical, faisant saillie vers le haut, et située plus haut que les premier et deuxième conduits 10, 20. La portion cylindrique 3 est ouverte à son extrémité supérieure, et cette ouverture, ou une partie de cette ouverture, forme l'orifice de prise d'air 4. L'orifice de prise d'air 4 peut présenter un axe A4 sensiblement vertical. L'axe A4 peut être sensiblement confondu avec l'axe A22 de la deuxième portion 22 du deuxième conduit 20.

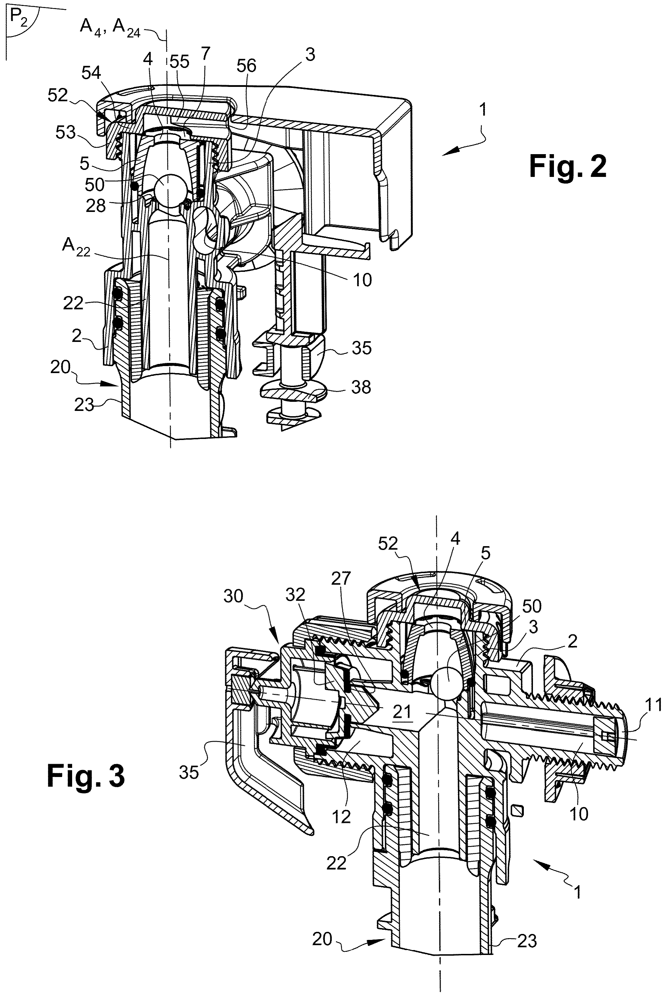

Comme illustré sur les figures 1 et 2, on définit le plan P2 comme le plan vertical orthogonal au premier conduit 10 et contenant l'axe A4. On définit également le plan P1 comme le plan vertical orthogonal au plan P2 et contenant l'axe A4.

Le deuxième conduit 20 comporte une lumière 24 qui est située sensiblement au droit verticalement de l'orifice de prise d'air 4. En d'autres termes, l'orifice de prise d'air 4 est situé sensiblement au-dessus de la lumière 24. La lumière 24 peut être ménagée dans la première portion 21 du deuxième conduit 20, de préférence au voisinage de la jonction entre les première et deuxième portions 21, 22 du deuxième conduit 20.

La lumière 24 présente une bordure périphérique 28 qui définit une surface d'appui. La lumière 24 peut être oblongue ; ainsi, comme on le voit sur les figures 1 et 2, la largeur de la lumière est par exemple plus grande dans le plan P1 que dans le plan P2. La lumière 24 peut présenter un axe A24 sensiblement vertical. L'axe A4 de l'orifice de prise d'air 4 et l'axe A24 de la lumière 24 peuvent être sensiblement confondus, ou être très proches l'un de l'autre.

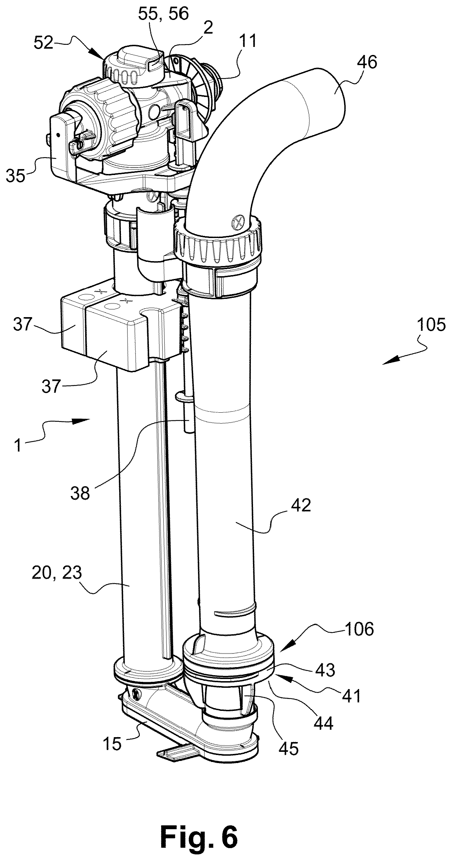

Le système d'amenée d'eau 1 comprend en outre un dispositif de modification de l'écoulement 40, représenté de façon schématique sur la figure 1. Ce dispositif 40 est fixé au deuxième conduit 20 en aval de la lumière 24. Du fait de sa structure, ce dispositif 40 crée une contre-pression lorsque de l'eau s'écoule dans le système 1 en direction du réservoir 101. De préférence, le dispositif 40 est situé en aval du corps 2, par exemple dans la troisième portion 23 du deuxième conduit 20 comme cela est illustré sur la figure 1, voire même en aval de l'extrémité aval 26 du deuxième conduit 20, comme cela sera décrit en référence aux figures 6 à 8.

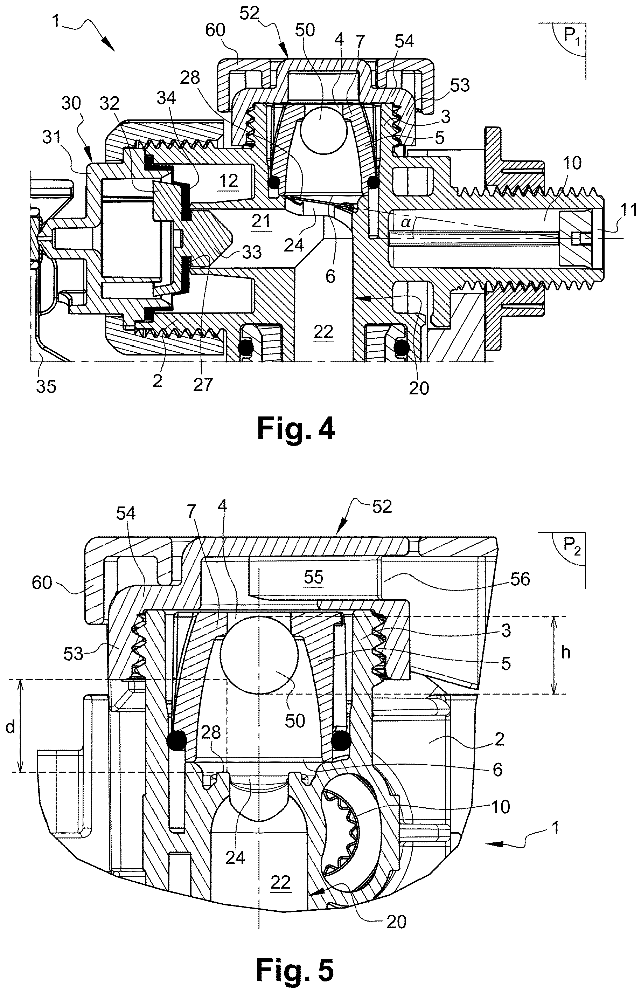

Le système d'amenée d'eau 1 comprend de plus un obturateur 50 dont la fonction est d'obturer l'orifice de prise d'air 4 lorsque la soupape 30 est ouverte, pour limiter les éclaboussures. L'obturateur 50 est mobile entre :
- une position basse (figure 1 à 3), dans laquelle il repose sur la surface d'appui 28 en ménageant dans la lumière 24 un espace de communication 29 entre l'intérieur et l'extérieur du deuxième conduit 20, l'orifice de prise d'air 4 étant alors dégagé ;
- et une position haute (figures 4 et 5), dans laquelle il obture l'orifice de prise d'air 4.

Selon l'invention, l'obturateur 50 possède une densité supérieure à 1,4. La densité d'un corps est définie comme étant le rapport entre la masse de ce corps et celle d'un même volume d'eau ou, en d'autres termes, comme le rapport entre la masse volumique de ce corps et la masse volumique de l'eau, en tant que référence. Ainsi, l'obturateur 50 ne peut pas flotter sur l'eau mais au contraire coule dans l'eau. Dans ces conditions, le déplacement de l'obturateur 50 de sa position basse à sa position haute ne résulte pas de la flottaison sur l'eau qui s'écoule dans le système d'amenée d'eau 1, mais de la force de poussée due à la contre-pression créée par le dispositif de modification de l'écoulement 40, c'est-à-dire à la pression qui s'oppose à l'écoulement de l'eau.

L'obturateur 50 peut être réalisé en acier inoxydable, dont la densité est de l'ordre de 7 à 8, ou en verre, dont la densité est de l'ordre de 2,4 à 2,8.

L'obturateur 50 peut être une bille.

A titre d'exemple, on peut utiliser une bille en acier inoxydable de 1,5 à 2,5 g.

Comme on le voit sur le figure 4, on peut prévoir que la surface d'appui définie par la lumière 24 s'étende sensiblement dans un plan qui est incliné par rapport à un plan horizontal, vers l'aval, d'un angle α de l'ordre de 4 à 8°. Avec une lumière 24 oblongue dont la grande dimension est orientée globalement parallèlement à l'axe A21 de la première portion 21 du deuxième conduit 20 (moyennant l'inclinaison précitée), on obtient un agencement particulièrement intéressant. En effet, de la sorte, en position basse, du fait de la gravité, l'obturateur 50 se localise de façon reproductible à l'extrémité aval de la lumière 24. De plus, la partie amont de la lumière 24 est libre, permettant une évacuation plus efficace de l'air.

Dans l'exemple illustré sur la figure 1, l'obturateur 50 est situé dans la portion cylindrique 3 du corps 2. Selon un mode de réalisation possible, un logement 5 est ménagé dans ladite portion cylindrique 3 pour recevoir l'obturateur 50. Le logement 5 est monté avec étanchéité à l'intérieur de la portion cylindrique 3 et s'étend sur sensiblement toute la hauteur de la portion cylindrique 3.

Le logement 5 possède la forme d'une cloche convergeant vers le haut. Il présente une ouverture inférieure 6 située au voisinage de la lumière 24 ménagée dans le deuxième conduit 20 et, à sa partie supérieure, une collerette intérieure 7 définissant une ouverture centrale sensiblement ronde et d'axe vertical qui forme l'orifice 4 de prise d'air. Ainsi, l'orifice 4 de prise d'air est ménagé dans une paroi sensiblement horizontale.

Le fonctionnement du système d'amenée d'eau 1 est le suivant.

Lorsque le réservoir 101 est rempli, le flotteur 37 est en position haute et le système d'amenée d'eau 1 est alors dans un état inactif où le clapet 32 est en position fermée et l'obturateur 50 en position basse (figures 1 à 3).

En partant de cet état inactif du système 1, lorsque le niveau d'eau dans le réservoir 101 baisse, typiquement après que le système de chasse d'eau a été actionné, le flotteur 37 descend, entraînant le pivotement du levier 35 et l'ouverture du clapet 32. L'eau provenant du réseau d'alimentation peut alors s'écouler dans le deuxième conduit 20. Cet écoulement en soi ne permettrait pas à l'obturateur 50 d'être déplacé vers sa position haute, puisque l'obturateur 50 est trop dense pour pouvoir flotter. En revanche, l'écoulement d'eau dans le dispositif de modification de l'écoulement 40 crée une contre-pression. Cette augmentation de pression en aval du dispositif de modification de l'écoulement 40 exerce sur l'obturateur 50 une force suffisante pour occasionner son déplacement jusqu'à sa position haute (figures 4 et 5).

Puisque la montée de l'obturateur 50 n'intervient pas immédiatement, par le phénomène de flottaison, mais intervient avec un décalage le temps que se crée la contre-pression, l'air présent dans le corps 2, et en particulier dans le logement 5, peut s'évacuer par l'orifice de prise d'air 4 qui n'est pas immédiatement obturé.

La forme convergente du logement 5 permet de guider le déplacement de l'obturateur 50. Ceci permet d'éviter des coincements de l'obturateur 50, notamment lorsque celui-ci n'est pas parfaitement aligné verticalement avec l'orifice de prise d'air 4, comme on le voit par exemple sur la figure 1. La forme convergente du logement 5 permet également de canaliser l'air vers l'orifice de prise d'air 4.

Afin d'augmenter encore le temps nécessaire à l'obturation de l'orifice de prise d'air 4, pour permettre l'évacuation de davantage d'air, on peut prévoir que la distance d à parcourir par l'obturateur 50 entre la position basse et la position haute soit relativement importante. Ainsi, cette distance d peut être supérieure à la moitié de la hauteur h de l'obturateur 50 (c'est-à-dire au diamètre de l'obturateur lorsque celui-ci est une bille), et de préférence supérieure à cette hauteur h. A titre exemple, la distance d peut être de l'ordre de 1,25 x h. Selon un mode de réalisation, à titre d'exemple, la distance d peut être comprise entre 10 et 15 mm.

Dans la mesure où l'orifice de prise d'air 4 n'est pas obturé immédiatement lorsque l'eau commence à s'écouler dans le deuxième conduit 20, des gouttelettes sont susceptibles de passer par cet orifice, ce qui n'est pas souhaitable. Pour limiter les éclaboussures, on peut prévoir un capuchon 52 qui est monté sur le corps 2 au-dessus de l'orifice de prise d'air 4. Le capuchon 52 peut comporter une jupe 53 qui est par exemple vissée ou clipée sur la portion cylindrique 3 du corps 2, une paroi transversale 54, et un canal 55 qui est situé au-dessus de la paroi transversale 54 et qui s'étend par exemple sensiblement parallèlement à cette dernière. Le canal 55 possède un trou situé en regard de l'orifice de prise d'air 4 et débouche à l'extérieur du corps 2, via un trou 56. Ainsi, des gouttes projetées depuis l'intérieur du corps via l'orifice de prise d'air 4 peuvent entrer dans le canal 55, en étant projetées contre sa paroi supérieure, puis retomber toujours dans le canal 55 où elles sont guidées jusqu'au trou 56, pour finalement retomber dans le réservoir 101 dans lequel est monté le système d'amenée d'eau 1.

Bien entendu, l'air peut également entrer via le canal 55 jusqu'à l'orifice de prise d'air 4.

En outre, un déflecteur 60 (voir figures 4 et 5) peut être monté au-dessus du capuchon 52, afin que les éclaboussures soient le moins visible et le moins sonore que possible.

Un tel système d'amenée d'eau 1 est destiné à faire partie de toilettes 100 comprenant en outre un réservoir de chasse d'eau 101 et une cuvette 102. Ledit système 1 est généralement logé dans le réservoir 101. Le système d'amenée d'eau 1 peut être utilisé de différentes façons comme on le verra ci-après.

On se réfère aux figures 6 à 8 qui illustrent un premier mode de réalisation.

Dans ce cas, le dispositif de modification de l'écoulement 40 comprend un embout 41 qui est fixé à l'extrémité aval 26 du deuxième conduit 20. Plus spécifiquement, l'extrémité aval 26 du deuxième conduit 20 peut être située à proximité de la paroi de fond 103 du réservoir 101, comme illustré schématiquement sur la figure 8, et l'embout 41 peut être fixé à l'extrémité aval 26 du deuxième conduit 20 via un conduit intermédiaire 15. Le conduit intermédiaire 15 peut présenter une forme coudée permettant de faire passer l'écoulement d'eau d'une direction sensiblement verticale descendante à une direction sensiblement verticale ascendante. Ainsi, l'embout 41 est traversé par un flux d'eau ascendant. L'entrée 16 du conduit intermédiaire 15, fixée directement à l'extrémité aval 26 du deuxième conduit 20, et la sortie 17 du conduit intermédiaire 15 peuvent être situées sensiblement à la même hauteur.

L'embout 41 possède une section convergente. Il peut comporter une section amont sensiblement cylindrique prolongée par une section aval sensiblement tronconique.

En outre, un tube d'éjection 42 vertical ascendant est monté sur l'embout 41. A cet effet, l'embout 41 peut comporter une collerette 43 à son extrémité aval sur laquelle l'extrémité amont du tube d'éjection 42 vient se fixer, en regard de l'embout 41. La collerette 43 est pourvue d'au moins un orifice 44 et, de préférence, d'ailettes 45 de renfort. De plus, un tube de déversement 46 est monté à l'extrémité aval du tube d'éjection 42.

Lorsque le clapet 32 est ouvert et que l'eau circule dans le deuxième conduit 20, le rétrécissement formé par l'embout 41 engendre une augmentation de la vitesse d'écoulement de l'eau et une diminution de la pression, donc une aspiration de l'eau contenue dans le réservoir 101 par le ou les orifices 44, dans le tube d'éjection 42. Comme illustré sur la figure 8, l'embout 41 et la partie amont du tube d'éjection 42 forment ainsi un dispositif d'aspiration 106 par effet Venturi.

Le tube de déversement 46 est configuré pour diriger l'eau en direction de la cuvette 102. A cet effet, le tube de déversement 46 peut être coudé et son extrémité aval peut déboucher dans ou au regard d'un espace 107 des toilettes communiquant avec un déversoir 108 débouchant en partie supérieure de la cuvette 102.

Le système d'amenée d'eau 1, le tube d'éjection 42 et le tube de déversement 46 forment ainsi un système de chasse d'eau 105.

Le fonctionnement d'un tel système de chasse d'eau 105, basé sur l'aspiration par effet Venturi, ne fait pas intervenir la gravité. De ce fait, le réservoir de chasse d'eau 101 n'a pas besoin d'être positionné en hauteur. Comme on le voit sur la figure 7, le réservoir 101 peut être situé sensiblement à la même hauteur que la cuvette 102, ce qui permet d'obtenir des toilettes 100 très compactes.

En outre, les toilettes 100 comprennent un système de remplissage 109 du réservoir de chasse d'eau 101 qui est distinct du système de chasse d'eau 105.

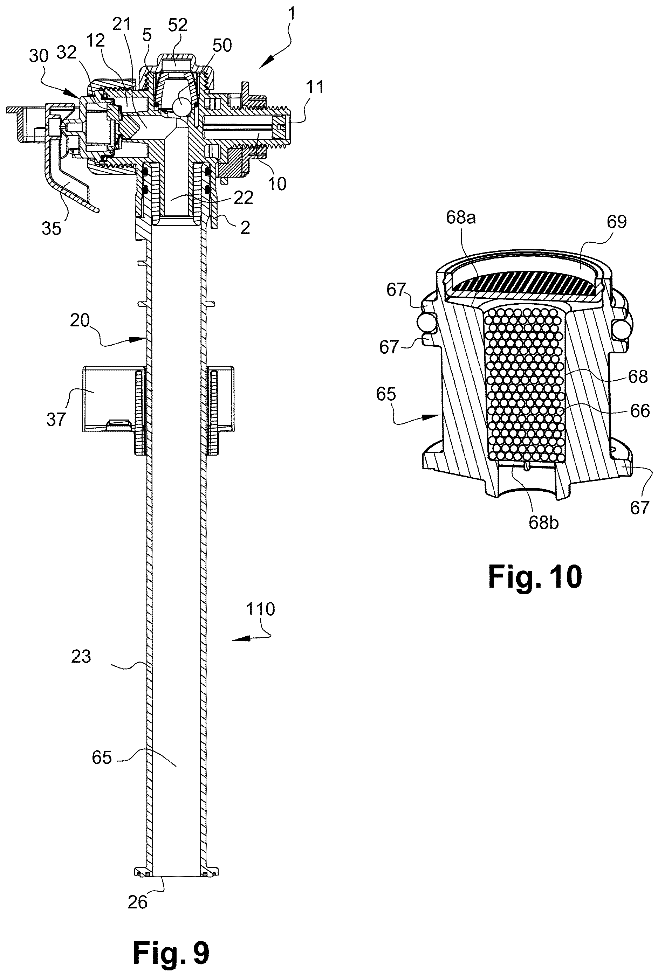

On se réfère à présent aux figures 9 et 10 qui illustrent un deuxième mode de réalisation.

Dans ce cas, le dispositif de modification de l'écoulement 40 comprend un manchon 65 monté à l'intérieur du deuxième conduit 20, de préférence dans la troisième portion 23, comme cela est représenté schématiquement sur la figure 9. Le manchon 65 contient un ensemble de billes 66 entre lesquelles l'eau peut s'écouler, et forme un silencieux permettant la diminution du bruit engendré par l'écoulement. Le manchon 65 peut être rempli de billes 66 sur au moins 80% de sa hauteur. A titre d'exemple, les billes 66 peuvent présenter un diamètre de l'ordre de 1 mm.

Le passage de l'eau entre les billes 66 ralentit l'écoulement et crée donc une contre-pression.

Comme on le voit sur la figure 10, le manchon 65 peut présenter un diamètre inférieur à celui de la portion du deuxième conduit 20 dans laquelle il est inséré, et être pourvu de lèvres 67 périphériques extérieures assurant le maintien et l'étanchéité par rapport à la face intérieure du deuxième conduit. Le manchon 65 peut posséder une partie principale 68, contenant les billes 66 dont l'entrée 68a, de plus grand diamètre, est équipée d'un élément de filtration 69, et dont la sortie 68b, de plus petit diamètre, forme un rétrécissement de section.

Un tel système d'amenée d'eau 1 forme un système de remplissage 110 d'un réservoir de chasse d'eau 101, destiné à être placé dans un tel réservoir 101.

Ainsi, l'invention apporte une amélioration déterminante aux systèmes d'amenée d'eau dans un réservoir de chasse, en permettant une diminution significative du bruit engendré par l'entrée d'eau dans le réservoir, tout particulièrement lorsque ce système est pourvu d'un dispositif de modification de l'écoulement qui crée une contre-pression en fonctionnement. Grâce à la présence éventuelle d'un capuchon, cet avantage sonore ne s'accompagne pas de l'apparition d'éclaboussures non souhaitables. En outre, un tel système peut trouver différentes applications, notamment en tant que système de chasse d'eau mettant en œuvre l'effet Venturi, ou en tant que système de remplissage de réservoir de chasse d'eau.

## Revendications

1. Système d'amenée d'eau (1) dans un réservoir de chasse d'eau (101), comprenant, en position montée :
- un corps (2) comportant dans sa partie supérieure un orifice de prise d'air (4) ;
- un premier conduit (10) ménagé dans le corps (2), configuré pour être raccordé, à son extrémité amont (11), à un réseau d'alimentation en eau ;
- un deuxième conduit (20) ménagé au moins en partie dans le corps (2), présentant une extrémité amont (25) en communication fluidique avec le premier conduit (10) via une ouverture (27), et une extrémité aval (26) située plus bas que l'extrémité amont (25), le deuxième conduit (20) comportant une lumière (24) située sensiblement au droit verticalement de l'orifice de prise d'air (4), la bordure périphérique (28) de la lumière (24) définissant une surface d'appui ;
- une soupape (30) qui est montée sur le corps (2) et qui, en fonction de la hauteur d'eau dans le réservoir (101), peut être dans un état fermé dans lequel un clapet (32) de la soupape (30) obture ladite ouverture (27) avec étanchéité, ou dans un état ouvert dans lequel l'ouverture (27) est libérée ;
- un obturateur (50) mobile entre :
- une position basse, dans laquelle il repose sur la surface d'appui (28) en ménageant dans la lumière (24) un espace de communication (29) entre l'intérieur et l'extérieur du deuxième conduit (20), l'orifice de prise d'air (4) étant dégagé ;
- et une position haute, dans laquelle il obture l'orifice de prise d'air (4) ;
- et un dispositif de modification de l'écoulement (40) qui est fixé au deuxième conduit (20) en aval de la lumière (24) et qui crée une contre-pression lorsque de l'eau s'écoule dans le système en direction du réservoir (101), le système d'amenée d'eau (1) étant **caractérisé en ce que** l'obturateur (50) possède une densité supérieure à 1,4, l'empêchant ainsi de flotter, de sorte que, en partant d'un état inactif du système où le clapet (32) est en position fermée et l'obturateur (50) en position basse, l'ouverture de la soupape (30) et l'écoulement d'eau qui en résulte dans le deuxième conduit (20) provoque le déplacement de l'obturateur (50) vers sa position haute sous l'effet de la contre-pression créée par le dispositif de modification de l'écoulement (40).

2. Système d'amenée d'eau selon la revendication 1, **caractérisé en ce que** l'obturateur (50) est réalisé en un matériau appartenant au groupe constitué de : l'acier inoxydable, le verre, l'aluminium, le polyoxyméthylène (POM), les matériaux plastiques chargés.

3. Système d'amenée d'eau selon la revendication 1 ou 2, **caractérisé en ce que** l'obturateur (50) est une bille.

4. Système d'amenée d'eau selon la revendication 3, **caractérisé en ce que** la lumière (24) ménagée dans le deuxième conduit (20) est oblongue ou sensiblement ovale.

5. Système d'amenée d'eau selon l'une des revendications 1 à 4, **caractérisé en ce que** la distance (d) parcourue par l'obturateur (50) entre la position basse et la position haute est supérieure à la moitié de la hauteur (h) de l'obturateur (50), de préférence supérieure à la hauteur (h) de l'obturateur (50).

6. Système d'amenée d'eau selon l'une des revendications 1 à 5, **caractérisé en ce que** l'obturateur (50) est situé dans un logement (5) ménagé dans le corps (2), ledit logement (5) possédant la forme d'une cloche convergeant vers le haut, et présentant une ouverture inférieure (6) située au voisinage de la lumière (24) ménagée dans le deuxième conduit (20) et une ouverture supérieure située au voisinage de ou formant l'orifice de prise d'air (4).

7. Système d'amenée d'eau selon l'une des revendications 1 à 6, **caractérisé en ce que** le deuxième conduit (20) comporte une première portion (21) sensiblement horizontale dans laquelle est ménagée la lumière (24), prolongée par une deuxième portion (22) sensiblement verticale et descendante, la lumière (24) étant de préférence située au voisinage de la jonction entre les première et deuxième portions (21, 22).

8. Système d'amenée d'eau selon les revendications 7 et 4, **caractérisé en ce que** la surface d'appui définie par la lumière (24) s'étend sensiblement dans un plan qui est incliné par rapport à un plan horizontal, vers l'aval, d'un angle (α) de l'ordre de 4 à 8°, et **en ce que** la lumière (24) présente une grande dimension orientée globalement parallèlement à l'axe (A21) de la première portion (21) du deuxième conduit (20).

9. Système d'amenée d'eau selon l'une des revendications 1 à 8, **caractérisé en ce qu'**il comprend en outre un capuchon (52) qui est monté sur le corps (2) au-dessus de l'orifice de prise d'air (4), et qui comporte un canal (55) possédant un trou situé en regard de l'orifice de prise d'air (4) et débouchant à l'extérieur du corps (2), de sorte que des gouttes projetées depuis l'intérieur du corps (2) via l'orifice de prise d'air (4) puissent entrer dans le canal (52) et y être guidées jusqu'à retomber dans le réservoir (101), en position montée du système (1).

10. Système d'amenée d'eau selon l'une des revendications 1 à 9, **caractérisé en ce que** le dispositif de modification de l'écoulement (40) comprend un embout (41) fixé à l'extrémité aval (26) du deuxième conduit (20), l'embout (41) possédant une section convergente et étant configuré pour former une partie d'un dispositif d'aspiration (106) par effet Venturi.

11. Système d'amenée d'eau selon l'une des revendications 1 à 9, **caractérisé en ce que** le dispositif de modification de l'écoulement (40) comprend un manchon (65) monté à l'intérieur du deuxième conduit (20), le manchon (65) contenant un ensemble de billes (66) entre lesquelles l'eau peut s'écouler, et formant un silencieux permettant la diminution du bruit engendré par l'écoulement.

12. Toilettes (100) comportant une cuvette (102), un réservoir de chasse d'eau (101) et un système d'amenée d'eau (1) dans le réservoir selon l'une des revendications 1 à 11.

13. Toilettes selon la revendication 12, comprenant un système de chasse d'eau (105) qui comporte :
- le système d'amenée d'eau (1) conforme à la revendication 10;
- un tube d'éjection(42) vertical ascendant monté sur l'embout (41), l'extrémité amont du tube d'éjection (42) étant placée en regard de l'extrémité aval de l'embout (41), au moins un orifice (44) étant ménagé entre l'embout (41) et le tube d'éjection (42) pour permettre l'aspiration de l'eau contenue dans le réservoir (101) par effet Venturi ;
- un tube de déversement (46) monté à l'extrémité aval du tube d'éjection (42), pour diriger l'eau en direction de la cuvette (102).

14. Toilettes selon la revendication 13, **caractérisé en ce que** le réservoir (101) de chasse d'eau est situé sensiblement à la même hauteur que la cuvette (102), et **en ce que** les toilettes (100) comprennent en outre un système de remplissage (109) du réservoir de chasse d'eau qui est distinct du système de chasse d'eau (105).

15. Toilettes selon la revendication 12, où le système d'amenée d'eau (1) est conforme à la revendication 11, ledit système d'amenée d'eau (1) formant un système de remplissage (110) du réservoir (101) de chasse d'eau.

## Patentansprüche

1. Wasserzufuhrsystem (1) in einem Spülkasten (101), umfassend, in eingebauter Stellung:
- einen Körper (2), der im oberen Teil eine Entlüftungsöffnung (4) aufweist;
- eine erste im Körper (2) vorgesehene Leitung (10), die so eingerichtet ist, dass sie an ihrem vorgelagerten Ende (11) an ein Wasserversorgungsnetz angeschlossen ist;
- eine zweite mindestens teilweise im Körper (2) vorgesehene Leitung (20), die ein vorgelagertes Ende (25) in Fluidverbindung mit der ersten Leitung (10) über eine Öffnung (27) und ein nachgelagertes Ende (26) aufweist, das tiefer als das vorgelagerte Ende (25) liegt, wobei die zweite Leitung (20) ein im Wesentlichen senkrecht zur Entlüftungsöffnung (4) gelegenes Licht (24) aufweist, wobei der Umfangsrand (28) des Lichts (24) eine Auflagefläche definiert;
- ein Ventil (30), das am Körper (2) montiert ist und das sich in Abhängigkeit von der Wasserhöhe im Kasten (101) in einem geschlossenen Zustand befinden kann, in dem eine Ventilklappe (32) des Ventils (30) die Öffnung (27) dicht verschließt, oder in einem geöffneten Zustand, in dem die Öffnung (27) freigegeben ist;
- einen beweglichen Verschluss (50) zwischen:
- einer niedrigen Stellung, in der er auf der Auflagefläche (28) aufliegt, wobei im Licht (24) ein Verbindungsraum (29) zwischen der Innenseite und der Außenseite der zweiten Leitung (20) vorgesehen ist, wobei die Entlüftungsöffnung (4) frei ist;
- und einer hohen Stellung, in der er die Entlüftungsöffnung (4) verschließt;
- und eine Durchflussänderungsvorrichtung (40), die an der zweiten Leitung (20) nach dem Licht (24) befestigt ist und einen Gegendruck erzeugt, wenn Wasser in das System in Richtung des Kastens (101) fließt, wobei das Wasserzufuhrsystem (1) **dadurch gekennzeichnet ist, dass** der Verschluss (50) eine Dichte von mehr als 1,4 aufweist,
wodurch verhindert wird, dass er schwimmt, sodass ausgehend von einem inaktiven Zustand des Systems, in dem sich die Ventilklappe (32) in der geschlossenen Stellung und der Verschluss (50) in der unteren Stellung befindet, das Öffnen des Ventils (30) und der daraus resultierende Wasserfluss in die zweite Leitung (20) bewirkt, dass der Verschluss (50) unter der Wirkung des von der Durchflussänderungsvorrichtung (40) erzeugten Gegendrucks in seine obere Stellung bewegt wird.

2. Wasserzufuhrsystem nach Anspruch 1, **dadurch gekennzeichnet, dass** der Verschluss (50) aus einem Material hergestellt ist, das zur Gruppe gehört, bestehend aus: Edelstahl, Glas, Aluminium, Polyoxymethylen (POM), den gefüllten Kunststoffmaterialien.

3. Wasserzufuhrsystem nach Anspruch 1 oder 2, **dadurch gekennzeichnet, dass** der Verschluss (50) eine Kugel ist.

4. Wasserzufuhrsystem nach Anspruch 3, **dadurch gekennzeichnet, dass** das in der zweiten Leitung (20) vorgesehene Licht (24) länglich oder im Wesentlichen oval ist.

5. Wasserzufuhrsystem nach einem der Ansprüche 1 bis 4, **dadurch gekennzeichnet, dass** der von dem Verschluss (50) zwischen der unteren Stellung und der oberen Stellung zurückgelegte Abstand (d) größer ist als die Hälfte der Höhe (h) des Verschlusses (50), vorzugsweise größer als die Höhe (h) des Verschlusses (50).

6. Wasserzufuhrsystem nach einem der Ansprüche 1 bis 5, **dadurch gekennzeichnet, dass** sich der Verschluss (50) in einer im Körper (2) vorgesehenen Aufnahme (5) befindet, wobei die Aufnahme (5) die Form einer nach oben konvergierenden Glocke aufweist und eine untere Öffnung (6) in der Nähe des in der zweiten Leitung (20) vorgesehenen Lichts (24) und eine obere Öffnung in der Nähe der Entlüftungsöffnung (4) aufweist oder diese bildet.

7. Wasserzufuhrsystem nach einem der Ansprüche 1 bis 6, **dadurch gekennzeichnet, dass** die zweite Leitung (20) einen ersten im Wesentlichen horizontalen Abschnitt (21) aufweist, in dem das Licht (24) vorgesehen ist, verlängert durch einen zweiten im Wesentlichen vertikalen und absteigenden Abschnitt (22), wobei sich das Licht (24) vorzugsweise in der Nähe der Verbindung zwischen dem ersten und dem zweiten Abschnitt (21, 22) befindet.

8. Wasserzufuhrsystem nach den Ansprüchen 7 und 4, **dadurch gekennzeichnet, dass** sich die durch das Licht (24) definierte Auflagefläche im Wesentlichen in einer Ebene erstreckt, die gegenüber einer horizontalen Ebene nach unten um einen Winkel (α) im Bereich von 4 bis 8° geneigt ist, und dass das Licht (24) eine große Abmessung aufweist, die insgesamt parallel zur Achse (A21) des ersten Abschnitts (21) der zweiten Leitung (20) ausgerichtet ist.

9. Wasserzufuhrsystem nach einem der Ansprüche 1 bis 8, **dadurch gekennzeichnet, dass** es ferner eine Kappe (52) umfasst, die am Körper (2) oberhalb der Entlüftungsöffnung (4) montiert ist, und einen Kanal (55) aufweist, der ein Loch gegenüber der Entlüftungsöffnung (4) aufweist, das außerhalb des Körpers (2) mündet, sodass Tropfen, die vom Inneren des Körpers (2) über die Entlüftungsöffnung (4) herausgeschleudert werden, in den Kanal (52) gelangen können und dort geführt werden, bis sie in der eingebauten Stellung des Systems (1) in den Kasten (101) zurückfällt.

10. Wasserzufuhrsystem nach einem der Ansprüche 1 bis 9, **dadurch gekennzeichnet, dass** die Durchflussänderungsvorrichtung (40) einen am nachgelagerten Ende (26) der zweiten Leitung (20) befestigten Stutzen (41) umfasst, wobei der Stutzen (41) einen konvergierenden Bereich aufweist und so eingerichtet ist, dass er einen Teil einer Saugvorrichtung (106) durch Venturi-Effekt bildet.

11. Wasserzufuhrsystem nach einem der Ansprüche 1 bis 9, **dadurch gekennzeichnet, dass** die Durchflussänderungsvorrichtung (40) eine Muffe (65) umfasst, die im Inneren der zweiten Leitung (20) montiert ist, wobei die Muffe (65) eine Gruppe von Kugeln (66) enthält, zwischen denen Wasser fließen kann, und einen Schalldämpfer bildet, der die Verringerung des durch den Durchfluss verursachten Geräuschs ermöglicht.

12. Toilette (100), die eine Toilettenschüssel (102), einen Spülkasten (101) und ein Wasserzufuhrsystem (1) in den Spülkasten nach einem der Ansprüche 1 bis 11 aufweist.

13. Toilette nach Anspruch 12, umfassend ein Spülsystem (105), das Folgendes aufweist:
- das Wasserzufuhrsystem (1) nach Anspruch 10;
- ein vertikal aufsteigendes Auswurfrohr (42), das an der Spitze (41) montiert ist, wobei das vorgelagerte Ende des Auswurfrohrs (42) gegenüber dem nachgelagerten Ende der Spitze (41) platziert ist, wobei mindestens eine Öffnung (44) zwischen der Spitze (41) und dem Auswurfrohr (42) vorgesehen ist, um das Ansaugen des im Kasten (101) enthaltenen Wassers durch Venturi-Effekt zu ermöglichen;
- ein Ausgießrohr (46), das am nachgelagerten Ende des Auswurfrohrs (42) montiert ist, um das Wasser in Richtung der Toilettenschüssel (102) zu leiten.

14. Toilette nach Anspruch 13, **dadurch gekennzeichnet, dass** sich der Spülkasten (101) im Wesentlichen auf derselben Höhe wie die Toilettenschüssel (102) befindet und dass die Toilette (100) ferner ein vom Spülsystem getrenntes Füllsystem (109) für den Spülkasten aufweist (105).

15. Toilette nach Anspruch 12, wobei das Wasserzufuhrsystem (1) gemäß Anspruch 11 ausgebildet ist und das Wasserzufuhrsystem (1) ein Füllsystem (110) für den Spülkasten (101) bildet.

## Claims

1. A system (1) for feeding water into a flush tank (101), comprising, in the mounted position:
- a body (2) including in its upper part an air intake port (4);
- a first pipe (10) provided in the body (2), configured to be connected, at its upstream end (11), to a water supply network;
- a second pipe (20) provided at least partly in the body (2), having an upstream end (25) in fluid communication with the first pipe (10) via an opening (27), and a downstream end (26) located lower than the upstream end (25), the second pipe (20) including a lumen (24) located substantially vertically in line with the air intake port (4), the peripheral edge (28) of the lumen (24) defining a bearing surface;
- a valve (30) which is mounted on the body (2) and which, according to the height of water in the tank (101), can be in a closed state in which a flap (32) of the valve (30) shuts off said opening (27) sealingly, or in an open state in which the opening (27) is released;
- a shutter (50) movable between:
- a low position, in which it rests on the bearing surface (28) while providing in the lumen (24) a communication space (29) between the inside and the outside of the second pipe (20), the air intake port (4) being clear;
- and a high position, in which it shuts off the air intake port (4);
- and a flow modification device (40) which is fastened to the second pipe (20) downstream of the lumen (24) and which creates a back pressure when water flows through the system towards the tank (101), the water feed system (1) being **characterized in that** the shutter (50) has a density greater than 1.4, thus preventing it from floating, so that, starting from an inactive state of the system where the flap (32) is in the closed position and the shutter (50) is in the lower position, the opening of the valve (30) and the resulting flow of water into the second pipe (20) causes the shutter (50) to move to its upper position under the effect of the back pressure created by the flow modification device (40).

2. The water feed system according to claim 1, **characterized in that** the shutter (50) is made of a material belonging to the group consisting of: stainless steel, glass, aluminum, polyoxymethylene (POM), filled plastic materials.

3. The water feed system according to claim 1 or 2, **characterized in that** the shutter (50) is a ball.

4. The water feed system according to claim 3, **characterized in that** the lumen (24) provided in the second pipe (20) is oblong or substantially oval.

5. The water feed system according to any of claims 1 to 4, **characterized in that** the distance (d) traveled by the shutter (50) between the low position and the high position is greater than half the height (h) of the shutter (50), preferably greater than the height (h) of the shutter (50).

6. The water feed system according to any of claims 1 to 5, **characterized in that** the shutter (50) is located in a housing (5) provided in the body (2), said housing (5) having the shape of a bell converging upwards, and having a lower opening (6) located in the vicinity of the lumen (24) provided in the second pipe (20) and an upper opening located in the vicinity of the air intake port (4) or forming the latter.

7. The water feed system according to any of claims 1 to 6, **characterized in that** the second pipe (20) includes a first substantially horizontal portion (21) in which the lumen (24) is provided, extended by a second substantially vertical and descending portion (22), the lumen (24) preferably being located in the vicinity of the junction between the first and second portions (21, 22).

8. The water feed system according to claims 7 and 4, **characterized in that** the bearing surface defined by the lumen (24) extends substantially in a plane which is inclined relative to a horizontal plane, downstream, by an angle (α) in the range of 4 to 8°, and **in that** the lumen (24) has a large dimension oriented generally parallel to the axis (A21) of the first portion (21) of the second pipe (20).

9. The water feed system according to any of claims 1 to 8, **characterized in that** it further comprises a cap (52) which is mounted on the body (2) above the air intake port (4), and which includes a channel (55) having a hole located opposite the air intake port (4) and emerging outside the body (2), so that drops projected from the inside of the body (2) via the air intake port (4) can enter the channel (52) and be guided therein until they fall back into the tank (101), in the mounted position of the system (1).

10. The water feed system according to any of claims 1 to 9, **characterized in that** the flow modification device (40) comprises a tip (41) fastened to the downstream end (26) of the second pipe (20), the tip (41) having a convergent section and being configured to form part of a device (106) for sucking by Venturi effect.

11. The water feed system according to any of claims 1 to 9, **characterized in that** the flow modification device (40) comprises a sleeve (65) mounted inside the second pipe (20), the sleeve (65) containing a set of balls (66) between which the water can flow, and forming a silencer allowing the decrease of the noise generated by the flow.

12. A toilet (100) including a bowl (102), a flush tank (101) and a system (1) for feeding water into the tank according to any of claims 1 to 11.

13. The toilet according to claim 12, comprising a flush system (105) which includes:
- the water feed system (1) in accordance with claim 10;
- an ascending vertical ejection tube (42) mounted on the tip (41), the upstream end of the ejection tube (42) being placed opposite the downstream end of the tip (41), at least one port (44) being provided between the tip (41) and the ejection tube (42) to allow the suction of the water contained in the tank (101) by Venturi effect;
- an overflow tube (46) mounted at the downstream end of the ejection tube (42), for directing water towards the bowl (102).

14. The toilet according to claim 13, **characterized in that** the flush tank (101) is located substantially at the same height as the bowl (102), and **in that** the toilet (100) further comprises a system (109) for filling the flush tank which is separate from the flush system (105).

15. The toilet according to claim 12, wherein the water feed system (1) is in accordance with claim 11, said water feed system (1) forming a system (110) for filling the flush tank (101).
